# EUROPEAN PATENT SPECIFICATION

(11) **EP 0 308 858 B1**
(45) Date of publication and mention of the grant of the patent: **05.07.1995**
(21) Application number: 88115362.1
(22) Date of filing: 20.09.1988
(51) Int. Cl.: H04N 1/46

(54) **Method of correcting color image data for obtaining proof image**
Farbilddatenkorrekturverfahren zur Erzielung von Probendruckbildern
Procédé pour la correction de données d'images en couleurs pour l'obtention d'images d'épreuve

(30) Priority: 22.09.1987 JP 238058/87
(43) Date of publication of application: 29.03.1989
(73) Proprietor: Dainippon Screen Mfg. Co., Ltd., Kamikyo-ku Kyoto 602 (JP)
(72) Inventor: Nakatsuka, Kimihiro Dainippon Screen Mfg. Co, Ltd., Horikawa-Dori Kamikyo-ku Kyoto (JP); Hatayama, Fumihiro Dainippon Screen Mfg. Co, Ltd., Horikawa-Dori Kamikyo-ku Kyoto (JP)
(74) Representative: Goddar, Heinz J., Dr.

(56) References cited:
- EP-A- 0 147 813
- FR-A- 2 528 207
- US-A- 4 075 662
- US-A- 4 710 785

## Description

The present invention relates to a method of electrically correcting color image data to obtain a proof image according to the preamble of claim 1.

Such a method for correcting color image data (Y, M, C, K) to obtain a proof image on an image reproduction means for previewing a printed image produced to said color image data is disclosed in document EP-A-0 147 813. In this document, however, only a method for compensating an additivity failure caused by mixture of primary chromatic color components Y, M, and C is proposed by using only the primary chromatic signals Y, M and C. The achromatic signal K is kept to zero.

Moreover, a technique with respect to an intermediate color is disclosed in this document, in which the optimum color values of a color component trio r, g, b are obtained from primary chromatic signals Y, M, C by calculating an equation to thereby determine a conversion function. This rather complex equation has to be calculated for each pixel, so that due to the complex nature of this function a lot of time and computer power is consumed.

Further, the US-A-4 075 662 has to be mentioned in which a technique regarding compensation of gradation in a process of producing halftones is disclosed.

There, however densities of exposed or printed gray scale samples are measured, and the measured density values are stored in the storage device (in the form of digitalized shade numbers). These shade numbers are compared to shade numbers of reference gray samples.

This method, disadvantageously comprises necessarily a printing step using printing means, so that the method is time consuming and expensive in that prints have to be made.

In multicolor printing, inks of four colors, consisting of yellow (Y), magenta (M) and cyan (C) (i.e., primary chromatic colors), and black (K) (i.e., an achromatic color) for mainly compensating gradation of a dark part, are overprinted with each other, thereby to express various colors. Thus, the color tone of a printed image substantially depends on the ratios of the color components Y, M, C and K which directly influence the respective volumes of the inks.

Accordingly, it is important to previously adjust the ratios of the color components to desired values, and an apparatus for monitoring a reproduced image having the color components Y, M, C and K on a color CRT or a color film in advance of printing has been developed. In such an apparatus, the respective color components Y, M, C and K supplied from a color scanner are converted into color image data consisting of red (R), green (G) and blue (B), which are three primary colors of the additive color mixture in the color CRT, or into other color image data consisting of Y′, M′ and C′, which are three primary colors of the subtractive color mixture in the color film, wherein the achromatic color component K is substantially added to respective primary chromatic color components Y′, M′ and C′ for example.

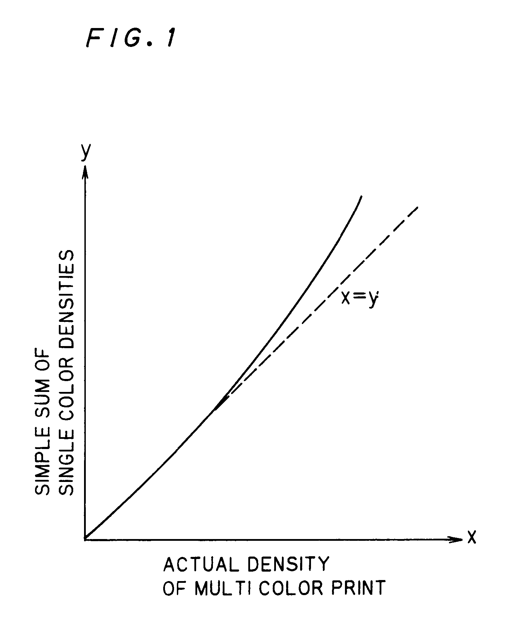

In this case, a problem is caused due to an additivity failure characteristic. Fig. 1 shows the relation between the actual density of a multicolor print and the simple sum of density values of respective single-color prints. The "addivity failure" is such that the density of an actual print obtained by overprinting a plurality of color inks with each other is lower than the simple sum of density values of single-color prints. This additivity failure characteristic is recognized in printed matter but is not present in a color CRT or a color film. Therefore, when the achromatic color component K is simply added to the respective chromatic color components Y, M and C to reproduce a proof image, the density of the proof image is different from that of the actual printed matter.

In order to obtain a proof image faithful to the reproduced image through compensation of the additivity failure, correction methods based on a correlation formula expressing the additivity failure have been developed, one of which is a technique using the well-known Neugebauer's equation.

However, since the additivity failure characteristic is influenced by the scattering of light by printing paper or the like, the additivity failure characteristic expressed by the correlation formula does not always coincide with that in actual printing.

Further, since different correlation formulas should be prepared for obtaining proof images corresponding to different printing methods (e.g., gravure printing, offset printing, and those with different screen patterns), respectively, the process for compensating the additivity failure is complicated.

Object of the invention is to provide a method, which does not use such complex equations as used to compensate an additivity failure in the document EP-A-0 147 813.

According to the present invention, such method comprises steps as described by the present claims.

The subclaims describe advantageous additions to this method.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a graph showing an additivity failure characteristic,
Figs. 2 and 3 are block diagrams showing the structure of a preferred embodiment of the present invention,
Fig. 4 is a graph showing reproduction curves,
Fig. 5 is a graph showing E.N.D. balance curves,
Fig. 6 is a flow chart showing the operation of creating color conversion table.
Fig. 7 illustrates color patches employed in creating a color conversion table,
Fig. 8 is a block diagram showing the structure of a converter employed in creating a color conversion table,
Fig. 9 is a block diagram showing the structure of a color conversion table generator,
Fig. 10 illustrates a color conversion correction table,
Fig. 11 illustrates a color space of the color conversion correction table,
Fig. 12 is a flow chart showing the procedure of creating a fitting table,
Fig. 13 illustrates gray scales employed in creating a fitting table,
Fig. 14 is a block diagram showing the structure of a fitting table generator, and
Figs. 15 and 16 are graphs showing fitting functions.

### DESCRIPTION OF THE PREFERRED EMBODIMENTS

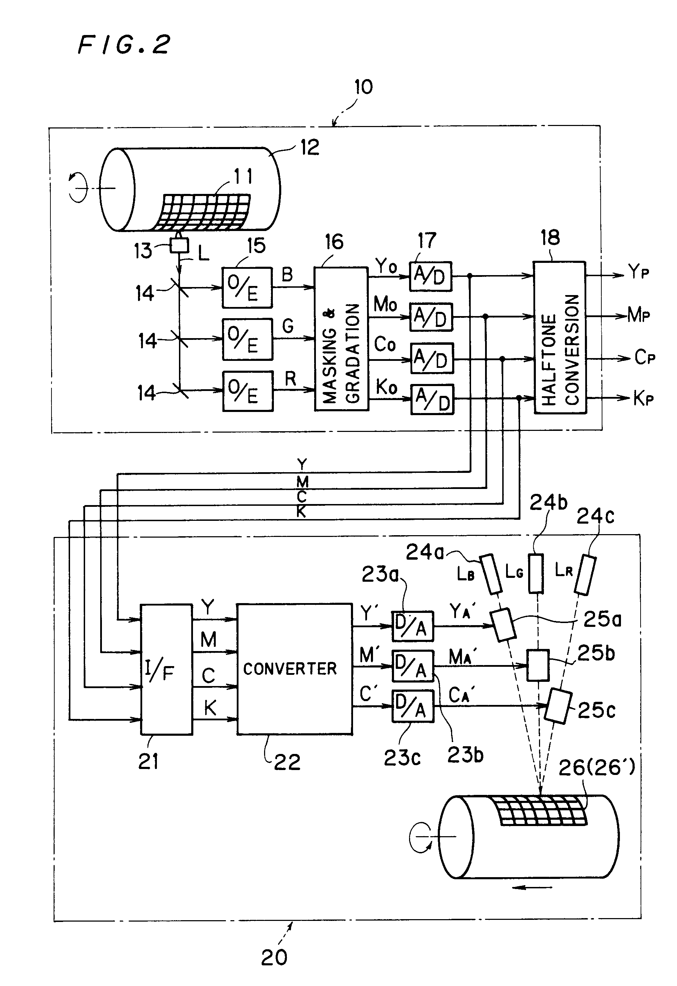

Fig. 2 is a block diagram schematically showing a process color scanner 10 and a proof image generator 20.

In the process color scanner 10, light L emitted from a light source (not shown) provided in a transparent original drum 12 penetrates the original drum 12 and an original 11 mounted on the same, to reach a pick-up lens 13. The light L collimated by the pick-up lens 13 is reflected by dichroic mirrors 14 and converted into three electric color signals B, G and R by photoelectric converters 15 including photomultipliers and the like, to be further converted into primary chromatic signals Y₀, M₀ and C₀ and an achromatic signal K₀ by a masking and gradation circuit 16. A-D converters 17 are adapted to convert the analog color signals Y₀, M₀, C₀ and K₀ into digital color signals Y, M, C and K indicating respective halftone dot area in percentage.

These halftone rate signals Y, M, C and K are further converted into halftone dot signals Y_{P}, M_{P}, C_{P} and K_{P} expressing halftone dots by a halftone conversion circuit 18. Halftone negatives or halftone positives for respective colors Y, M, C and K are produced in response to respective ones of the halftone dot signals Y_{P}, M_{P}, C_{P} and K_{P}.

In order to obtain a proof image on a color film, the halftone rate signals Y, M, C and K are transmitted to an interface circuit 21 provided in the proof image generator 20, to be further delivered to a converter 22.

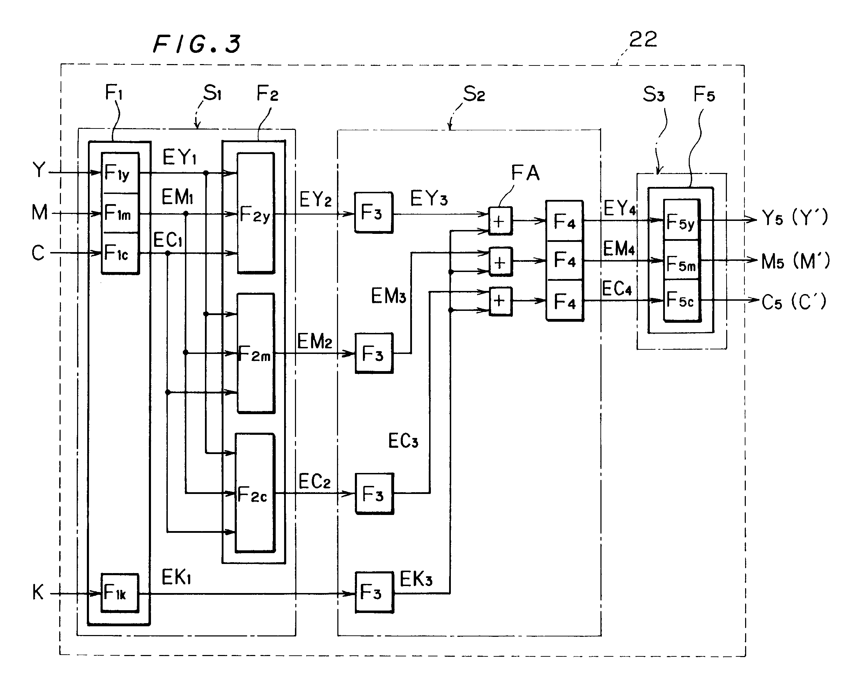

Fig. 3 is a block diagram showing the internal structure of the converter 22 according to the embodiment of the present invention.

The converter 22 comprises first, second and third processors S₁-S₃. The first processor S₁ converts the halftone rate signals Y, M, C and K into equivalent neutral density data EY₁, EM₁, EC₁ and EK₁, respectively. The primary chromatic components EY₁, EM₁ and EC₁ within the neutral density data are corrected in the processor S₁ so as to compensate a first additivity failure which will be caused by mixture of the primary colors, thereby to obtain primary chromatic components EY₂, EM₂ and EC₂. The second processor S₂ corrects a second additivity failure which is caused through addition of respective ones of the primary chromatic color components EY₂, EM₂, EC₂ and the achromatic color component EK₁. The third processor S₃ converts equivalent neutral density data EY₄, EM₄ and EC₄ output from the second processor S₂ into color density data Y₅, M₅, and C₅ for compensating the respective shifts of the characters of a proof image recorder and a color film, with which a proof image will be obtained.

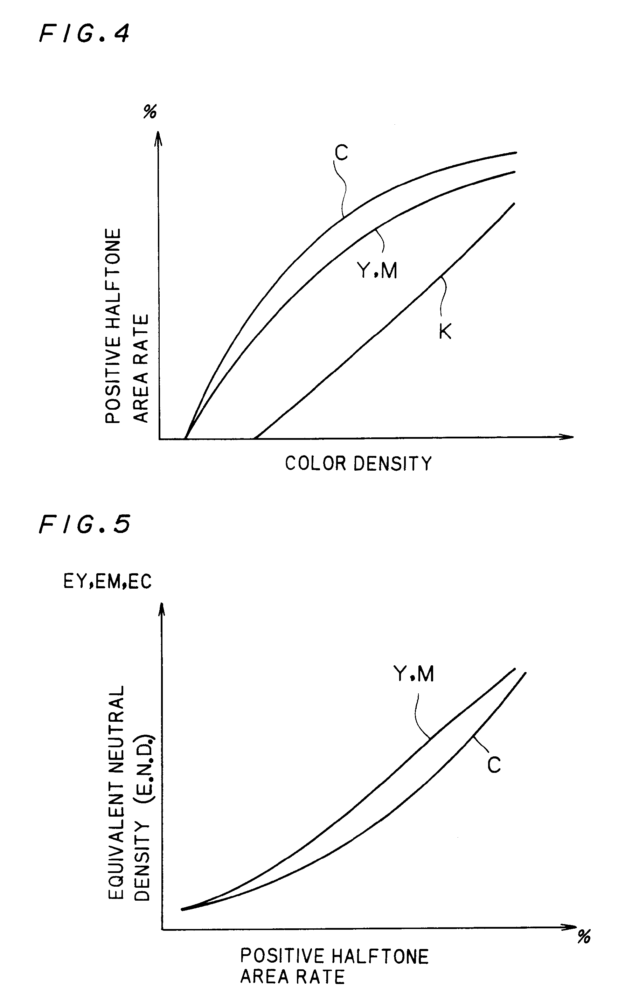

Detail of the construction and operation of the converter 22 is as follows: The halftone rate signals Y, M, C and K input into the first processor S₁ are converted into the equivalent neutral density data EY₁, EM₁, EC₁ and EK₁ by density conversion elements F₁ (F_{1y}, F₁ₘ, F_{1c} and F₁ₖ) respectively. Fig. 5 shows examples of E.N.D. balance curves for converting halftone area rate into equivalent neutral density (E.N.D.), which are stored in the elements F₁ as look-up tables, respectively. The E.N.D. balance of Fig. 5 is obtained on the basis of gray balance on a color film. Namely, if gray density of 2.0 is reproduced on a color film by combination of color densities of 1.5, 1.6 and 1.7 for yellow, magenta and cyan respectively, the curves are so presented that the respective positive halftone area rates corresponding to the color densities of 1.5 (Y), 1.6 (M) and 1.7 (Y) are converted into the common E.N.D. value of 2.0 through the curves. Alternatively, the halftone rate signals Y, M, C and K may be first converted into color density data respectively, and further converted into the equivalent neutral density (E.N.D.) data EY₁, EM₁, EC₁ and EK₁. Fig. 4 shows examples of reproduction curves for converting halftone area rate into color density. The halftone signals Y, M, C and K may be the digital signals expressing color density values before subjected to the conversion into halftone area rates. In this case, the density conversion elements F₁ may be so constructed as to convert the color density values into E.N.D. data.

The E.N.D. data EY₁, EM₁ and EC₁ of the primary chromatic components are processed by color conversion elements F₂ (F_{2y}, F₂ₘ and F_{2c}) separately from the E.N.D. data EK₁ of the achromatic color component. The color conversion elements F_{2y}, F₂ₘ and F_{2c} have three-dimensional color solid mapping functions, where a lattice point having coordinates (EY₁, EM₁, EC₁) in a three-dimentional coordinate system is mapped to another lattice point having coordinates (EY₂, EM₂, EC₂). More particularly, respective ones of the color conversion elements F_{2y}, F₂ₘ and F_{2c} are in the form of a color conversion table in which the values of the data EY₂, EM₂ and EC₂ are previously written with addresses corresponding to the values of the primary chromatic color component data EY₁, EM₁ and EC₁, respectively.

The color conversion elements F₂ are adapted to correct the E.N.D. data EY₁, EM₁ and EC₁ are compensating the first additivity failure characteristic among the primary chromatic color components obtained through experiential comparison between actual densities of a printed matter and a proof image. A method of setting such color conversion elements F₂ will be hereinafter described in detail.

The E.N.D. data EY₂, EM₂, EC₂ and EK₁ output from the first processor S₁ are converted into E.N.D. data EY₃, EM₃, EC₃ and EK₃ respectively by inverse fitting elements F₃ in the second processor S₂. The second processor S₂ corrects the second additivity failure caused in the following addition of the achromatic component EK₃ to the primary chromatic components EY₃, EM₃ and EC₃.

A fitting element F₄ is employed in order to correct the second additivity failure. The fitting elements F₄ are adapted to convert E.N.D. values of respective color components obtained by simply adding the achromatic color component EK₁ to the respective ones of the primary chromatic components EY₂, EM₂ and EC₂ into E.N.D. values equivalent to those of the respective color components in a printed matter. As hereinafter described in detail, the fitting element F₄ has a conversion character expressed with a nonlinear function obtained experientially.

In order to perform the conversion, the fitting elements F₄ hold a function G₄ having the following character:$\text{EY₄ = G₄ (EY₂ + EK₁)}$$\text{EM₄ = G₄ (EM₂ + EK₁)}$$\text{EC₄ = G₄ (EC₂ + EK₁)}$
where EY₄, EM₄ and EC₄ represent E.N.D. data of respective color components output from the second processors S₂. Further, the fitting function G₄ is common to the primary chromatic color component data EY₂, EM₂ and EC₂ (or EY₄, EM₄ and EC₄). This is because the data EY₂, EM₂, EC₂ and EK₁ are expressed in an E.N.D. value which is common to these color components.

Upon such conversion according to the expressions (1a) to (1c), however, the E.N.D. data EY₄, EM₄ and EC₄ of the primary chromatic components after conversion differ from the original E.N.D. data EY₂, EM₂ and EC₂, respectively, when the achromatic component data EK₁ output from the first processing means S₁ has a value of zero.

However, when the component EK₁ is zero and only the primary chromatic component data EY₂, EM₂ and EC₂ have finite values, which have already been subjected to correction of the first additivity failure in the first processors S₁, the second processor S₂ must output the values equal to those of the primary chromatic component data EY₂, EM₂ and EC₂ without correcting the second additivity failure. This is because the second additivity failure is caused by the addition of the achromatic component EK₁ or EK₃, and therefore, the correction thereof is not required when the addition is not substantially carried out.

In order to satisfy this requirement, the second processor S₂ is provided with inverse fitting elements F₃ holding the inverse function G₃ of the function G₄. The inverse fitting elements F₃ act upon the primary chromatic component data EY₂, EM₂, EC₂ and EK₁ to output data EY₃, EM₃ EC₃ EK₃, respectively. The achromatic color component EK₃ is added to the primary chromatic component data EY₃, EM₃ and EC₃ in added elements FA, to deliver the values obtained through the addition to the fitting elements F₄, respectively. The processing in the second processor S₂ is expressed as follows:$\text{EY₄ = G₄ (G₃ (EY₂) + G₃ (EK₁))}$$\text{EM₄ = G₄ (G₃ (EM₂) + G₃ (EK₁))}$$\text{EC₄ = G₄ (G₃ (EC₂) + G₃ (EK₁))}$
where G₄ = (G₃)⁻¹. When the achromatic component data EK₁ has a value of zero, the primary chromatic component data EY₄, EM₄ and EC₄ are equal to the input primary chromatic component data EY₂, EM₂ and EC₂, as expressed in the following equations:$\text{EY₄ = G₄ (G₃ (EY₂)) = EY₂}$$\text{EM₄ = G₄ (G₃ (EM₂)) = EM₂}$$\text{EC₄ = G₄ (G₃ (EC₂)) = EC₂}$

Also when none of the primary chromatic component data EY₂, EM₂ and EC₂ have finite values, invariance in density of the achromatic component data EK₁ is ensured in the second processor S₂.

The primary chromatic component data EY₄, EM₄ and EC₄ thus obtained with correction of the second additivity failure in the second processor S₂ are supplied to the third processor S₃.

The third processor S₃ has correction elements F₅ (F_{5y}, F₅ₘ and F_{5c}) for converting the inputs EY₄, EM₄ and EC₄ into the color density data Y₅, M₅ and C₅ (i.e., Y′, M′ and C′ in Fig. 2). The elements F₅ are look-up table memories, for example.

A procedure for setting the color conversion elements F₂ in the first processor S₁ is as follows.

A look-up table having a conversion character corresponding to the color conversion function G₂ is called a color conversion table CT. The color conversion table CT is adapted to obtain additive combinations of the primary chromatic components Y, M and C, for color conversion. In the preferred embodiment, the color conversion table CT is created through an observation of the densities of printed matter obtained by overprinting of the color inks corresponding to the primary chromatic components Y, M and C as hereinafter described, whereby the first additivity failure among the primary chromatic components is compensated through the conversion in the color conversion table CT.

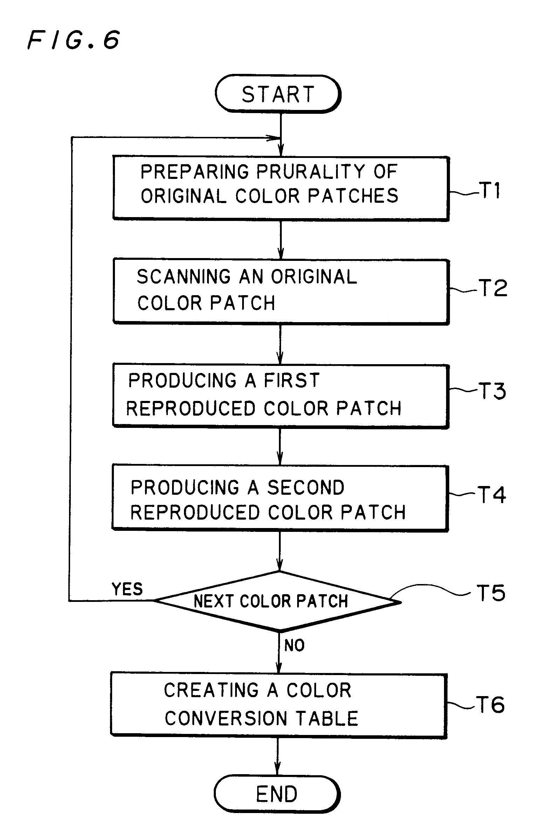

Fig. 6 shows the procedure for setting the color conversion table CT, and the contents thereof are as follows:

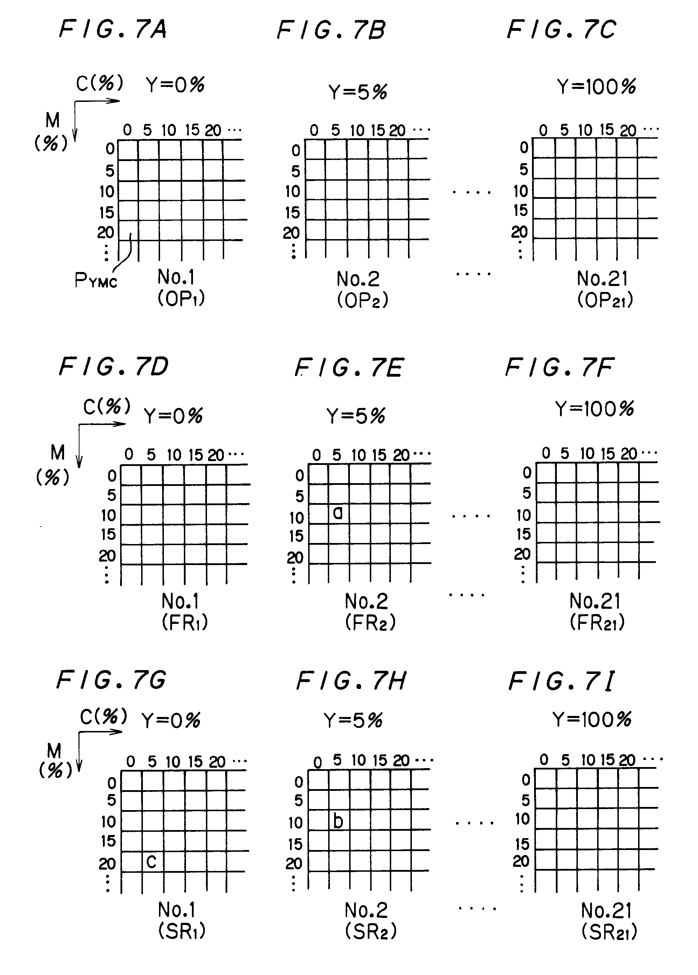

Step T1: A plurality of original color patches, being different in density values of the primary chromatic components Y, M and C from each other, are prepared as originals. Figs. 7A, 7B and 7C illustrate examples of the original color patches which are different in distribution of primary chromatic density values. For example, an original color patch No. 1 (OP₁) shown in Fig. 7A is formed by a plurality of unit patches P_{YMC} having constant yellow density corresponding to zero percent in halftone area rate, while as magenta and cyan density values varying every five percent in the halftone area rate.

Step T2: The first original color patch 11 (OP₁) within these original color patches is mounted on the original drum 12 to be scanned by the color scanner 10, thereby to obtain the halftone dot signals Y_{P}, M_{P} and C_{P}. In this process, the image of the original color patch 11 is separated into the chromatic components Y₀, M₀ and C₀ (Y_{P}, M_{P} and C_{P}) only, while the achromatic component K₀ (K_{P}) is set to be zero by an operator.

Step T3: On the basis of the respective halftone dot signals Y_{P}, M_{P} and C_{P} output from the color scanner 10, respective halftone positives of the chromatic colors Y, M and C are actually produced thereby to create a first reproduced color patch FR₁ for triple printing by utilizing blocks produced with the halftone positives. Figs. 7D illustrates an example of the first reproduced color patches FR₁ thus obtained.

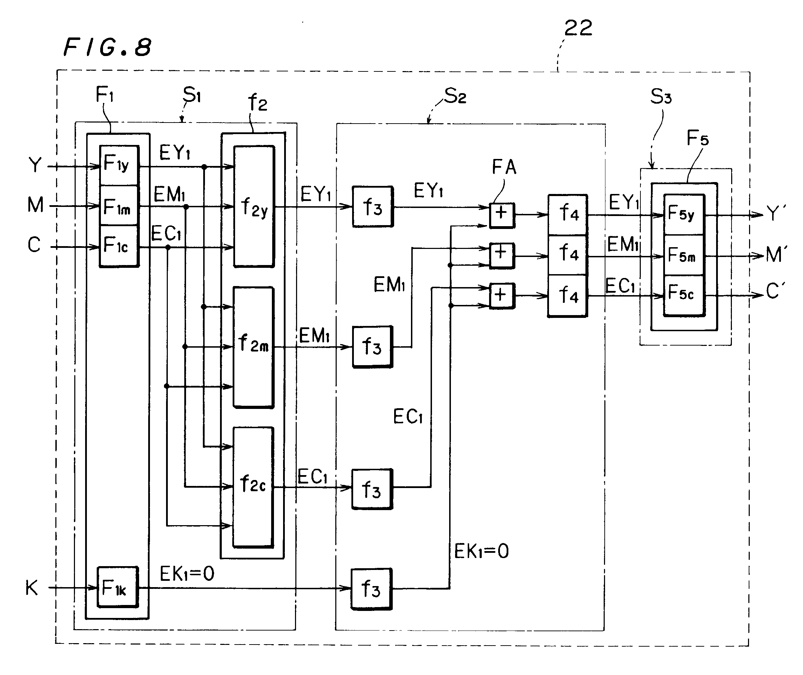

Step T4: The halftone rate signals Y, M and C obtained by reading the original color patch OP₁ at the step T2 are input to the converter 22 from the color scanner 10 through the interface circuit 21. Color density data Y′, M′ and C′ output from the converter 22 are converted into analog signals Y′_{A}, M′_{A} and C′_{A} by D-A converters 23a, 23b and 23c, respectively. Respective laser beams L_{B}, L_{G} and L_{R} of blue, green and red emitted from laser generators 24a to 24c, respectively are modulated with acoustic optical modulators (AOM) 25a to 25c, which are controlled by the respective analog signals Y′_{A}, M′_{A} and C′_{A}, to create a second reproduced color patch 26′ (SR₁) through exposure of a color film 26 and development thereof. Figs. 7G illustrates an example of the second reproduced color patches SR₁. At this time, the conversion characters in the converter 22 are set at linear conversion so that the color density data Y′, M′ and C′ have the same density levels with the halftone rate signals Y, M and C. Fig. 8 is a block diagram showing the equivalent structure of the converter 22 in this stage. The elements F₂ (F_{2y}, F₂ₘ, F_{2c}) of the first processor S₁ in Fig. 3 are equivalently replaced with elements f₂ (f_{2y}, f₂ₘ, f_{2c}) through storage of linear tables therein. The elements F₃ and F₄ of the second processing means S₂ in Fig. 3 are also equivalently replaced with elements f₃ and f₄ respectively through storage of linear tables therein. The elements f_{2y} f₂ₘ and f_{2c} output the input data EY₁, EM₁ and EC₁ themselves respectively, where those three data EY₁, EM₁ and EC₁ are commonly input to the elements f_{2y}, f₂ₘ and f_{2c}. The elements f₃ and f₄ also output the input data themselves. This is because the first and the second additivity failures, which will define the functions of the elements F₂, F₃ and F₄, are not known at this stage. However, the elements f₃ and f₄ may have arbitrary functions under the condition that the elments f₃ operate as inverse functions against the elements f₄ because invariance of the input data is maintained by those elements f₃ and f₄ in case of value of the achromatic component EK₁ being zero.

Step T5: The first original color patch OP₁ is replaced by a second original color patch OP₂ to perform the processing of the steps T2 to T4, thereby to reproduce first reproduced color patches FR₂ on a printed medium and second reproduced color patches SR₂ on a color film respectively. Thereafter the remaining original color patches OP₃ (not shown) to OP₂₁ are successively mounted on the scanner 10 to be subjected to a similar process, thereby to obtain first reproduced color patches FR₁ to FR₂₁ and second reproduction color patches SR₁ to SR₂₁ corresponding to the respective original color patches OP₁ to OP₂₁.

The original color patches OP₁ to OP₂₁ employed in the preferred embodiment have colored areas where density values of the respective primary chromatic components are changed stepwise by five percent in the halftone area rate. In order to obtain color image data corresponding to the original color patches, the respective primary chromatic component signals Y, M and C expressing the respective halftone area rates may be generated in the interior of the color scanner 10 without the image reading of the original color patches.

Step T6: Then, the color conversion table CT is created on the basis of the first reproduced color patches FR₁ to FR₂₁ made of printed matter and the second reproduced color patches SR₁ to SR₂₁ made of color film . The color conversion table CT is so constructed as to express the relation between the colors on the unit patches of the first reproduced color patches FR₁ to FR₂₁ and those on the unit patches of the second reproduced color patches SR₁ to SR₂₁ with respect to common original colors. For example, the color of a unit patch a (Y = 5 %, M = 10 %, C = 5 %) of the first reproduced color patch FR₂ in Fig. 7E should be matched with the color of a unit patch b of the second color patch SR₂ in Fig. 7H. In this case, a unit patch being identical in color (or approximate in hue) to the unit patch a is found within the second color patches SR₁ to SR₂₁, through human observation or density measurement. It is assumed here that the said unit patch thus found is a unit patch c of the color patch SR₁. Then, a color conversion table CT is so formed as to convert coordinates of a lattice point corresponding to the unit patch b (hereinafter referred to as a subject patch) into coordinates of a lattice point corresponding to the unit patch c (hereinafter referred to as a matching patch) in a three-dimensioinal color space. Such operation is repeated for every unit patch to create a color conversion table CT.

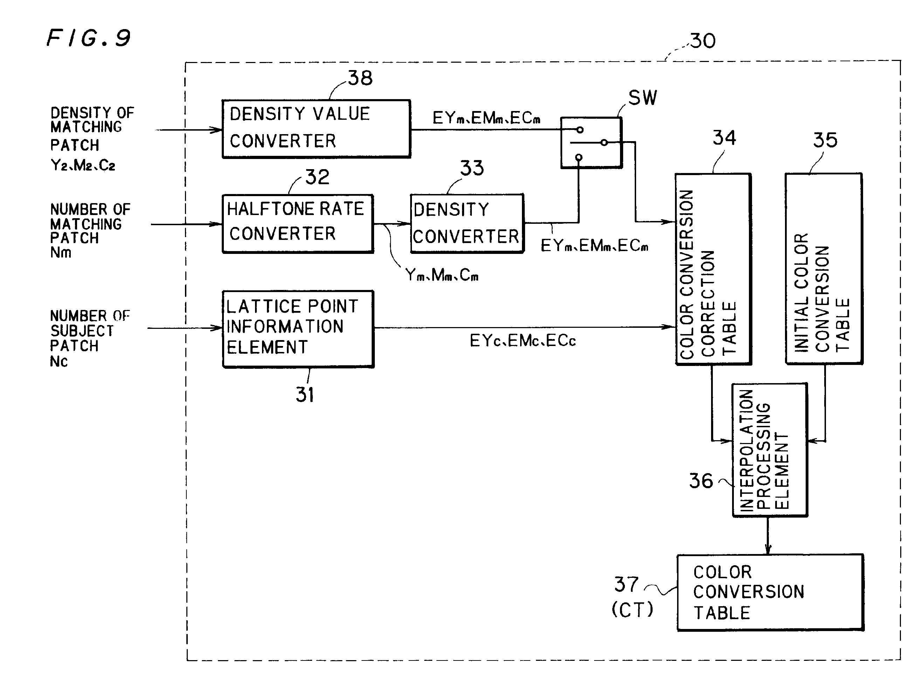

Fig. 9 is a function diagram showing a color conversion table generator 30 which is constructed with an off-line computer, for example.

A unit patch number Nc of the subject patch b is input to a lattice point information element 31. Different unit patch numbers are provided for each of the different unit patches having the different halftone area rates Y, M and C. The relation between the unit patch numbers and the halftone area rates Y, M and C are previously set in the lattice point information element 31. Since the halftone area rates Y, M and C corresponding to respective unit patches of the first reproduced color patches FR₁ to FR₂₁ can be previously known, the halftone area rates Y, M and C may be directly input to the lattice point information element 31 in place of the unit patch numbers. The lattice point information element 31 converts the input unit patch number Nc into coodinate data EY_{c}, EM_{c} and EC_{c} for a color conversion correction table element 34. The coordinate data EY_{c}, EM_{c} and EC_{c} are obtained as E.N.D. values.

A unit patch number Nm of the matching patch c is input to a halftone rate converter 32. The halftone rate converter 32 converts the unit patch number Nm into halftone ara rates Yₘ, Mₘ and Cₘ. The data thus converted into halftone percentage are supplied to a density converter 33 to be converted into matching density data EYₘ, EMₘ and ECₘ expressed in E.N.D..

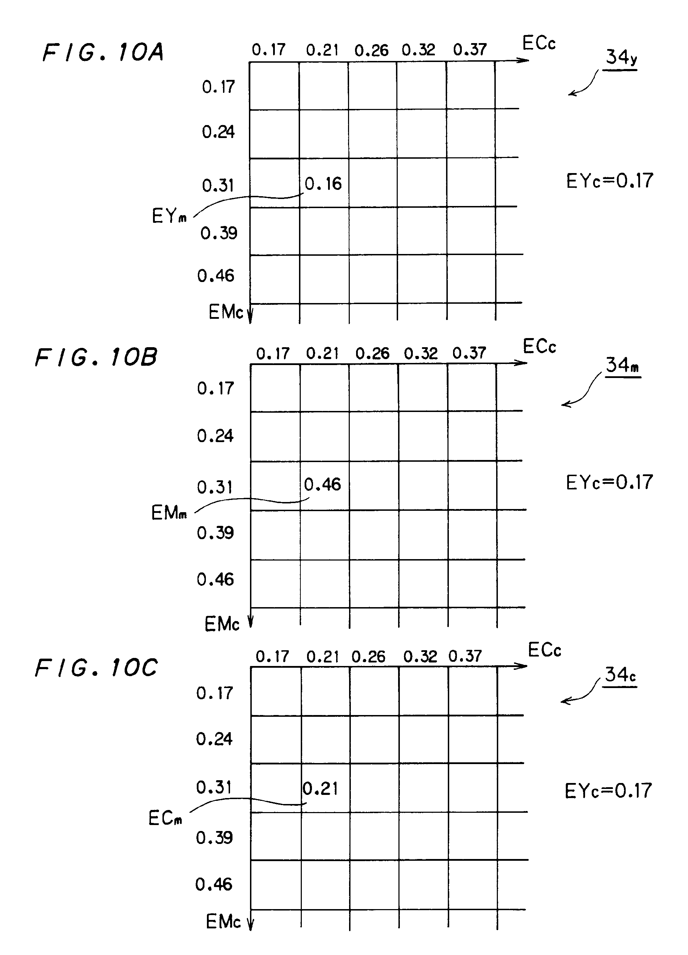

The coordinate data EY_{c}, EM_{c} and EC_{c} and the matching density data EYₘ, EMₘ and ECₘ are input to a color conversion correction table 34. The matching density data EYₘ, EMₘ and ECₘ are written in a three-dimensional address in the color conversion table 34 designated by the coordinate data EY_{c}, EM_{c} and EC_{c}, to specify a conversion rule at the lattice point corresponding to the coordinate data. Such processing is repeated to create the color conversion correction table 34. Fig. 10 shows an example of the color conversion correction table 34. The color conversion correction table 34 consists of three subtables 34_{y}, 34ₘ and 34_{c} corresponding to the matching density data EYₘ, EMₘ and ECₘ respectively. For example, the matching density data EYₘ (= 0.16), EMₘ (= 0.46) and ECₘ (= 0.21) are stored in the subtables 34_{y}, 34ₘ and 34_{c} respectively at the common lattice point defined by the coordinates (EY_{c}, EM_{c}, EC_{c}) = (0.17, 0.31, 0.21). The lattice point (EY_{c}, EM_{c}, EC_{c}) = (0.17, 0.31, 0.21) corresponds to the unit patch b shown in Fig. 7H, and the coordinates thereof are obtained by converting the halftone area rates (Y, M, C) = (5%, 10%, 5%) of the unit patch b into E.N.D. data along the relation shown in Fig. 5. Further, the matching density data EYₘ (= 0.16), EMₘ (= 0.46) and ECₘ (= 0.21) are obtained by converting the halftone area rates Y (= 0%), M (=20%) and C (= 5%) of the unit patch c into E.N.D. data along the relation shown in Fig.5. In practice, lattice coordinates (EY_{c}, EM_{c}, EC_{c}) and matching density data (EYₘ, EMₘ, ECₘ) are provided not as analog values as shown in Fig. 10 but as digital values of eight bits, for example. A density range of 0.1 to 2.5, for example, is expressed in a digital value range of 0 to 255 by eight bits.

The color conversion correction table 34 is combined with an initial color conversion table 35 through an interpolation processing element 36 to obtain a color conversion table 37 (CT). The initial color conversion table 35 and the color conversion table 37 are in the same form with the color conversion correction table 34 shown in Fig. 10, so that both of the initial color conversion table 35 and the color conversion table 37 consist of three subtables corresponding to three matching data EYₘ, EMₘ and ECₘ respectively.

When the color conversion table 37 (CT) is initially created, coordinate values of the lattice points themselves are stored as matching data in respective lattice points of the initial color conversion table 35. Namely, data EY_{c}, EM_{c} and EC_{c} are respectively stored at lattice points having coordinates of (EY_{c}, EM_{c}, EC_{c}) in three subtables of the initial color conversion table 35. Data respectively stored in the initial color conversion table 35 and the color conversion correction table 34 are supplied to the interpolation processing element 36 to create the color conversion table 37 through interpolation.

It is possible to employ not the unit patch numbers but actually measured color density data Y₂, M₂ and C₂ as the data concerning the color to be converted. In this case, the color density data Y₂, M₂ and C₂ are converted into E.N.D. values by a density value converter 38, thereafter to supply the same to the color conversion correction table 34 through a switch SW.

Now, the interpolation process performed by the interpolation processing element 36 will be described.

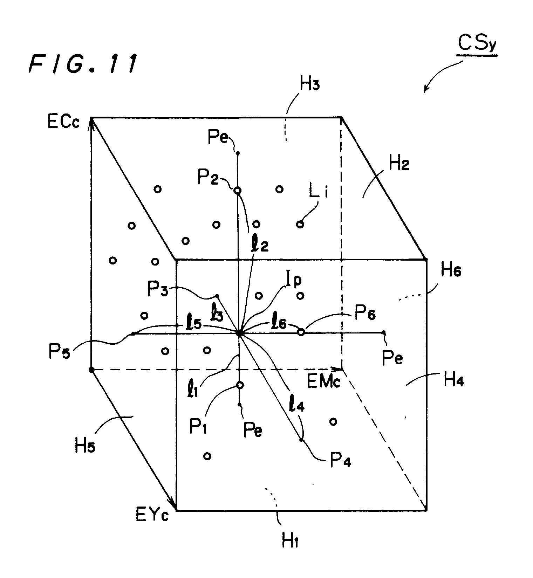

Fig. 11 shows a color space CS_{y} corresponding to the subtable 34_{y}. The color space CS_{y} is a cubic space surrounded by six end planes H₁ to H₆, and the matching density data are related to one or more lattice points Lᵢ, respectively, which are shown as white circles in Fig. 11. The lattice points Lᵢ having the matching density data will be referred to as effective lattice points. Interpolation data FY at a lattice point I_{P} (EY_{I}, EM_{I}, EC_{I}) is obtained as follows. If matching density data EYₘ is given at the lattice point I_{P} in the color conversion correction table 34, the same is used as the interpolation data FY for the color conversion table 37. If matching data is not given at the lattice point I_{P}, the interpolation data FY is obtained by linear interpolation with the following equation (4).$\text{FY = EY₀ + 1/3 {(DY₁ - EY₁) ℓ₂/(ℓ₁ + ℓ₂)} \text{+ (DY₂ - EY₂) ℓ₁/(ℓ₁ + ℓ₂)} \text{+ (DY₃ - EY₃) ℓ₄/(ℓ₃ + ℓ₄)} \text{+ (DY₄ - EY₄) ℓ₃/(ℓ₃ + ℓ₄)} \text{+ (DY₅ - EY₅) ℓ₆/(ℓ₅ + ℓ₆)} \text{+ (DY₆ - EY₆) ℓ₅/(ℓ₅ + ℓ₆)}}$
where
- FY:: interpolation data at the lattice point I_{P}
- EY₀:: Matching density data at the lattice point I_{P}, stored in the initial color conversion table 35
- DYᵢ (i = 1-6):: matching density data stored in the color conversion correction table 34 corresponding to six reference lattice points P₁-P₆
- EYᵢ (i = 1-6):: matching density data stored in the initial color conversion table 35 according to the six reference lattice points P₁-P₆
- ℓᵢ (i = 1-6):: distances from the lattice point I_{P} to the six reference lattice points P₁-P₆

The six reference lattice points P₁-P₆ are defined as such points that are the nearest points form the lattice point I_{P} along six direction lines being parallel or antiparallel to the coordinate axes EY_{c}, EM_{c} and EC_{c}. Fig. 11 shows the six reference lattice points P₁-P₆ for the lattice point I_{P}. If an effective lattice point, for which matching density data is stored in the color conversion correction table 34, does not exist along a direction line from the lattice point I_{P}, an end point Pₑ being an intersection point of the direction line with corresponding one of the six end planes H₁-H₆ is selected as the reference point Pᵢ, where matching density data DYᵢ and EYᵢ are equal to each other in the equation (4). Further, if the initial color conversion table 35 has an effective lattice point LLᵢ (not shown) between the lattice point I_{P} and the end point Pₑ, the effective lattice point LLᵢ may be selected as the reference point Pᵢ. In the case of Fig. 11, the reference lattice points P₁, P₂ and P₆ are the effective lattice points and the other reference points P₃, P₄ and P₅ exist on the end planes H₃, H₄ and H₅ respectively. So the values of the data DY₃, DY₄ and DY₅ are equal to those of EY₃, EY₄ and EY₅, respectively.

The interpolation equation (4) is adapted to the yellow component of color image data, but the same equation will be also adaptable to the magenta component and the cyan component to obtain interpolation data FM and FC respectively. The interpolation data FY, FM and FC are stored in the color conversion subtables 37_{y}, 37ₘ and 37_{c} respectively as matching density data.

As hereinabove described, the color conversion table CT is so formed as to convert the original density data EY₁, EM₁ and EC₁ into the converted density data EY₂, EM₂ and EC₂ on the basis of the reproduced colors on an actual printed matter and a color film, whereby density of the color film printed by utilizing the converted density data EY₂, EM₂ and EC₂ is made coincident with density of the printed matter obtained by overprinting the primary chromatic color inks with each other. Thus, correction of the first additivity failure between the primary chromatic components is performed by the color conversion table CT.

The subtables 37_{y}, 37ₘ and 37_{c} of the color conversion table CT are set in the color conversion elements F_{2y}, F₂ₘ and F_{2c} (Fig. 3), respectively. The coordinate data EY_{c}, EM_{c} and EC_{c} correspond to the E.N.D. data EY₁, EM₁ and EC₁ respectively, and the matching density data SY, SM and SC correspond to the E.N.D. data EY₂, EM₂ and EC₂, respectively. Next, a method of actually obtaining the fitting element F₄ for correcting the second additivity failure will be described.

As hereinabove described, the fitting element F₄ is also formed as a look-up table similarly to the color conversion element F₂. A table to be stored in the fitting element F₄ is herein called a fitting table FT.

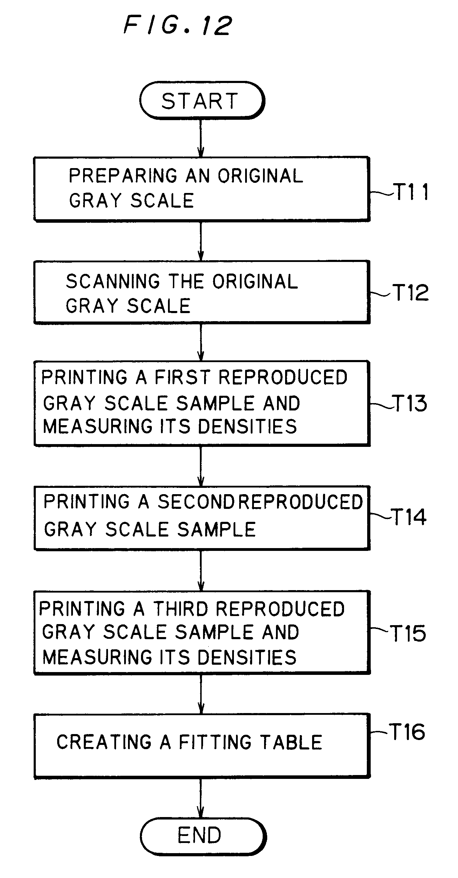

Fig. 12 is a flow chart showing the following procedure of creating the fitting table FT:

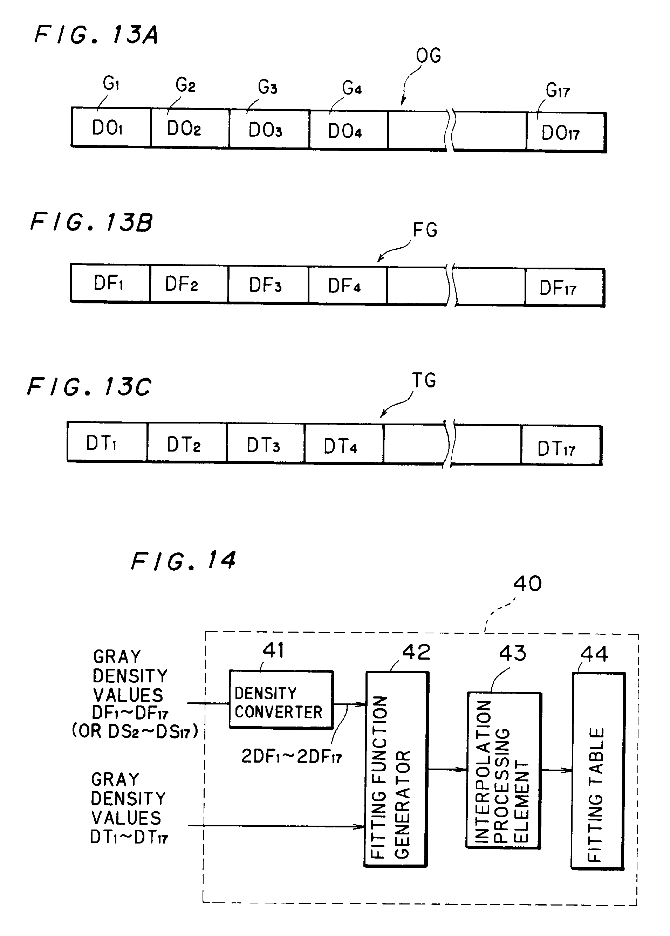

Step T11: An original gray scale OG (Fig. 13A), in which gray levels are changed stepwise from a gray step G₁ to a gray step G₁₇ is prepared. Density values of the respective gray steps G₁, G₂, ... G₁₇ are expressed with the symbols DO₁, DO₂, ... DO₃.

Step T12: The original gray scale OG is scanned, to read the densities thereof.

Step T13: Halftone positives for respective colors Y, M and C are produced on the basis of the halftone dot signals Y_{P}, M_{P} and C_{P} output from the color scanner 10 which scans the original gray scale OG, to print a first reproduced gray scale sample FG (Fig. 13B) for triple printing by utilizing the blocks produced with the halftone positives. Then, density values DF₁, DF₂, ... DF₁₇ of respective gray steps of the fist reproduced gray scale sample FG are measured

Step T14: A second reproduced gray scale sample is printed with only black (K) printer so that density values of respective gray steps thereof are identical to those of the respective gray steps of the first reproduced gray scale sample FG.

Step T15: The blocks for respective colors Y, M and C employed for printing the first reproduced gray scale sample FG and the block for the K printer employed for printing the second reproduced gray scale sample are utilized to print a third reproduced gray scale sample TG (Fig. 13C) by quadruple printing, and then, the density values DT₁, DT₂, ... DT₁₇ of respective gray steps of this sample are measured.

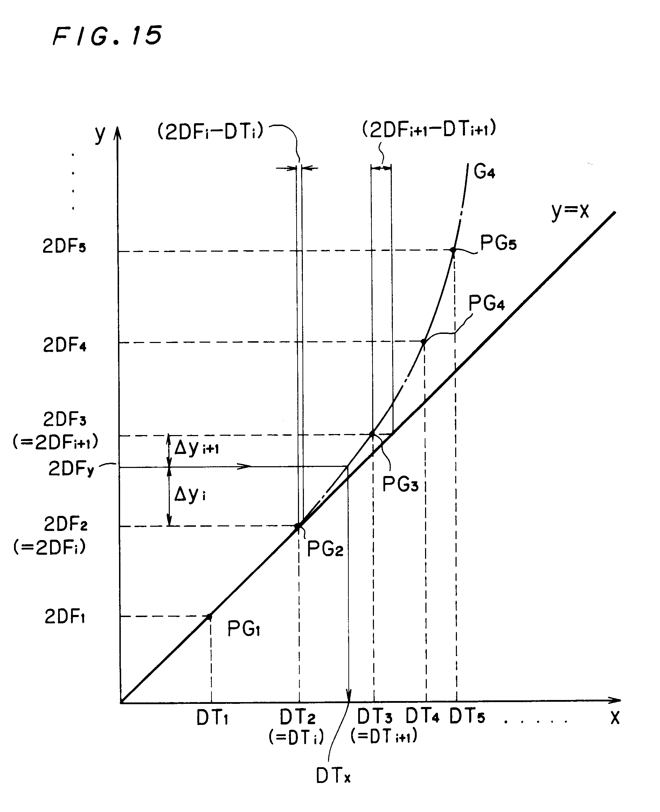

Step T16: A fitting table is created on the basis of actual density data obtained for the produced gray scale samples. Fig.15 is a block diagram showing the internal structure of a fitting table generator 40 which is constructed by an off-line computer for example.

The density values DF₁ to DF₁₇ of the first reproduced gray scale sample FG or the density values DS₁ to DS₁₇ of the second reproduced gray scale sample are input to a density converter 41. These samples are identical in density to each other in the respective gray steps, and hence density data of either sample are applicable. The density converter 41 doubles the input data to output the same. This processing corresponds to simple addition of density values of the Y, M and C prints and the density value of the K print. Since the additivity failures are not found on a color film, the density converter 41 doubling the input data substantially gives gray densities of a color film which will be obtained through the color image data employed for reproducing the third reproduced gray scale sample TG.

Output values of 2DF₁, to 2DF₁₇ from the density converter 41 and the density values DT₁ to DT₁₇ of the third reproduced gray scale sample TG are input to a fitting function generator 42. The fitting function generator 42 specifies reference gray points defined on the two-dimension coordinate plane defined with a y-axis (additivity axis) and an x-axis (additivity failure axis) as shown in Fig. 15, on the basis of the relation between the double density values 2DF₁ to 2DF₁₇ of the respective gray steps of the first reproduced gray scale sample FG and the density values DT₁ to DT₁₇ of the respective gray steps of the third reproduced gray scale sample TG. The reference gray points PG₁, ... PG₅ having coordinate values (DT₁, 2DF₁), ... (DT₅, 2DF₅) are plotted in Fig. 15.

The coordinate data as to the reference gray points are delivered to an interpolation processing element 43, in which the reference gray points are interpolated to give the fitting function G₄, thereby to create a fitting table 44. This interpolation is expressed by the follwing equation (5) for example.${\text{DT}}_{\text{x}} {\text{= 2DF}}_{\text{y}} {\text{- {(2DF}}_{\text{i}} {\text{- DT}}_{\text{i}} {\text{) Δy}}_{\text{i+1}} {\text{/(Δy}}_{\text{i}} {\text{+ Δy}}_{\text{i+1}} \text{)} {\text{+(2DF}}_{\text{i+1}} {\text{- DT}}_{\text{i+1}} {\text{) Δy}}_{\text{i}} {\text{/(Δy}}_{\text{i}} {\text{+ Δy}}_{\text{i+1}} \text{)}}$
where
- DTₓ:: interpolated density value defined on the x-axis
- 2DF_{y}:: density value on the y-axis at which interpolated density value on the x-axis is obtained
- 2DFᵢ, 2DFᵢ₊₁:: density values of reference gray points PGᵢ and PGᵢ₊₁ on the y-axis neighboring to the density value 2DF_{y}
- DTᵢ, DTᵢ₊₁:: density values of reference gray points PGᵢ and PGᵢ₊₁ on the x-axis
- Δyᵢ, Δyᵢ₊₁:: respective differences between density values 2DF_{y} and 2DFᵢ, and between density values 2DFᵢ₊₁ and 2DF_{Y}

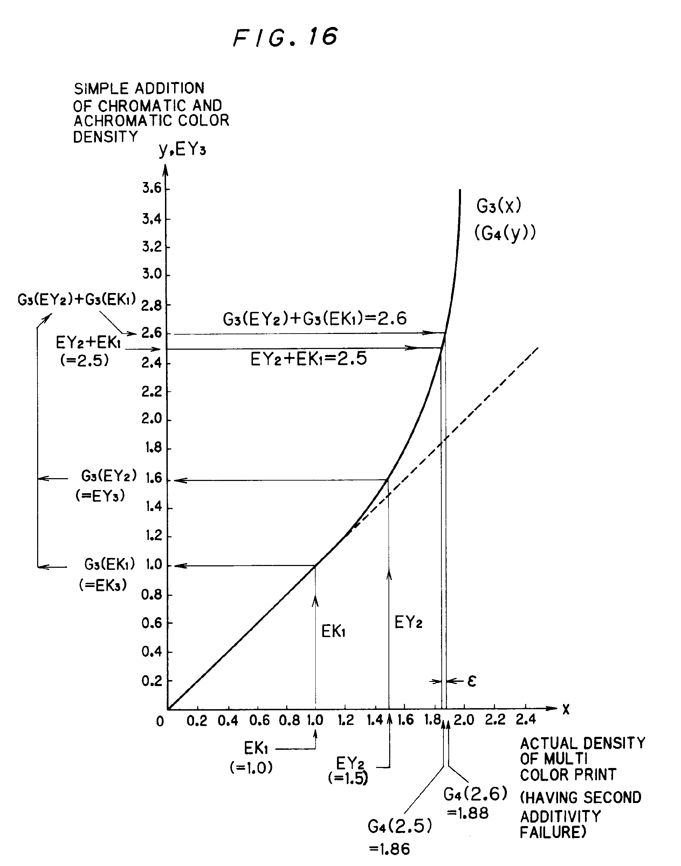

Fig. 16 shows fitting function G₄ thus obtained. Namely, the fitting table 44 operates accoridng to the fitting function G₄ for conversion from simple addition of the primary chromatic components and the achromatic component into other density data in which the second additivity failure is already compensated. The y-axis and the x-axis correspond to the input and the output of the table 44, respectively. Assuming that the x-axis represents the input and the y-axis represents the output to the contrary, the inverse function G₃ of the fitting function G₄ is obtained.

The fitting function G₄ is generated in the form of a look-up table and is set in the fitting element F₄ provided in the second processor S₂ in Fig. 3. The inverse function G₃ is also set in the inverse fitting element F₃. Because the color image data in the second processor S₂ are expressed as E.N.D. values, which indicate equivalent gray densities, the fitting function G₄ and the inverse fitting function G₃ are common to all of the primary chromatic components and those functions G₃ and G₄ obtained on the basis of gray density measurement are directly applicable to the element F₃ and F₄ respectively in the second processor S₂.

Since the fitting element F₄ is obtained as hereinabove described, correction in the second processor S₂ compensates the second additivity failure characteristic observed in actual overprinting. Also when compensating additivity failure in different printing methods (offset printing of different types of halftone dot, gravure printing, etc.), the table stored in the fitting element F₄ can be easily generated by obtaining actual density data according to the method described above.

As already pointed out, the inverse fitting function G₃ is introduced in order to ensure invariance in density of the primary chromatic components EY₂, EM₂ and EC₂ in the second processor S₂ when the value of the achromatic component EK₁ is zero. Therefore, when the achromatic component has a finite value, correction of the second additivity failure through the inverse function G₃ and the fitting function G₄ includes an error with respect to correction of the second additivity failure in comparison with a correction through the fitting function G₄ only.

The value of this error can be estimated through the following discussion with reference to the graph of the fitting function G₄ shown in Fig. 16.

When the density value EY₂ of the Y component is 1.5 and the density value EK₁ of the K component is 1.0, for example, density value EY₂ + EK₁ obtained by simply adding up these values is 2.5. Therefore, when the density value EY₂ + EK₁ (=2.5) is transformed using the fitting function G₄ without a preliminary transformation using the inverse function G₃, density value G₄(2.5) after such correction is 1.86, as shown in Fig. 16. On the other hand, when the respective density values EY₂ and EK₁ are preliminarily transformed through the inverse function G₃, the transformed values are G₃(EY₂) = 1.6 and G₃(EK₁) = 1.0, and an added value G₃(EY₂) + G₃(EK₁) is equal to 2.6. The added value is further converted by the fitting function G₄, the correction value G₄(2.6) having the value of 1.88 is obtained. Therefore, an error or discrepancy of the value G₄(2.6) obtained in the preferred embodiment from the ideal correction value G₄(2.5) is 0.02. Such an error substantially causes no problem in practice, and correction of the second additivity failure by the second processor S₂ is sufficient for a practical reproduction, regardless of the value of the achromatic component EK₁.

Although a color film is employed as image reproducing means in the preferred embodiment, a color CRT can also be employed as the image reproducing means.

Further, the density converter F₁ is not necessarily placed in the first processor S₁, but may be provided at the exterior thereof. The important feature of the present invention is that the equivalent neutral density signals EY₁, EM₁ and EC₁ are input in the color conversion element F₂ of the first processor S₁.

Further, the interpolation using the equations (4) and (5) for creating the color conversion table CT and the fitting table are linear interpolation, but non-linear interpolation by polynominal fitting, for example, may be also applicable.

According to the present invention, the first and second addivity failure can be compensated precisely in coincidence to actual overprinting, whereby a color image being well approximated to an actual printed matter can be reproduced or displayed by another color reproducing means while correction means required for compensating the additivity failures can be easily set.

In the second processor S₂, The primary chromatic components EY₂, EM₂ and EC₂ and the achromatic component EK₁ processed in the first processor S₁ are converted by the inverse function element F₃, respectively, to be thereafter added up, thereby to make the fitting element F₄ act upon the added value. Thus, invariance in density of the primary chromatic components EY₂, EM₂ and EC₂ can be ensured when there is no achromatic component EK₁ and invariance in density of the achromatic component EK₁ can be ensured when there are no primary chromatic components EY₂, EM₂ and EC₂.

## Claims

1. Method of electrically correcting color image data (Y, M, C and K) to obtain a proof image (26) on an image reproduction means (20) different from a printing means, for previewing a printed image to be produced on said printing means according to said color image data (Y, M, C and K),
comprising the steps of:
(A) a first preparing process including the steps of:
(a) preparing data of a reference color image (Y₀, M₀ and C₀) including first reference chromatic components (Y₁, M₁ and C₁) of which densities (EY₁, EM₁ and EC₁) are predetermined,
(b) producing first halftones (Y_{P}, M_{P} and C_{P}) for each of said first reference chromatic components (Y₁, M₁ and C₁) according to said reference color image data (Y₀, M₀ and C₀) and overprinting said first halftones (Y_{P}, M_{P} and C_{P}) with corresponding chromatic inks, thereby to obtain a first reproduced image (FR₁) on said printing means, said first reproduced image (FR₁) having a first color,
(c) producing a second reproduced image (SR₁) on said image reproduction means (10) without printing in accordance with said first reference chromatic components (Y₁, M₁ and C₁), said reproduced image (SR₁) having a second color different from said first color,
(d) comparing said first and second colors (CS_{y}) with each other, thereby to create a first color conversion table (F₂) which corrects said densities (EY₁, EM₁ and EC₁) of first reference chromatic components (Y₁, M₁ and C₁) such that said second reproduced image (SR₁) is identical to said first reproduced image (FR₁) in color,
characterized by
(B) a second preparing process including the steps of:
(e) preparing gray scale data (DO₀, ... DOᵢ) having second reference chromatic components (Y₂, M₂ and C₂) which express an image (FG) of a gray scale,
(f) producing second halftones for each of said second reference chromatic components (Y₂, M₂ and C₂) according to said gray scale data (DO₀, ... DOᵢ) and overprinting said second halftones with chromatic inks corresponding to said second reference chromatic components (Y₂, M₂ and C₂) to obtain a third reproduced image (TG) on said printing means,
(g) producing a third halftone of an achromatic component (EK₃) so that a density (DFₙ) of an image on a printed matter printed with said third halftone is identical to a density (DTₙ) of said third reproduced image (TG),
(h) overprinting said second halftones and third halftone with said second chromatic inks and an achromatic ink corresponding to said achromatic component (EK₃) on said printing means, respectively, thereby to obtain a fourth reproduced image,
(i) comparing both the densities (DTₓ), (DF_{y}) of said third reproduced image (TG) obtained by said step (f) or step (g) and said fourth reproduced image (FG) with each other to create a second color conversion table (F₄) which provides a non-linear relation between said both densities (DTₓ), (DF_{y}) of said third and fourth reproduced images, and
(C) a process for correcting said color image data to obtain said proof image (26), including the steps of:
(j) reading an image of an original with a color reader (10) to obtain said color image data (B, G, R) including first chromatic components (Y₁, M₁ and C₁) and said achromatic component (K),
(k) converting said first chromatic components (Y₁, M₁ and C₁) into second chromatic components (Y₂, M₂ and C₂) by using said first color conversion table (F₂) , said second chromatic components (Y₂, M₂ and C₂) having first corrected densities determined (EY₁, EM₁ and EC₁) by said first color conversion table (F₂), and
(l) combining said respective second chromatic components (Y₂, M₂ and C₂) with said achromatic component (K₁) to obtain third chromatic components (Y₃, M₃ and C₃) and further converting said third chromatic components (Y₃, M₃ and C₃) into fourth chromatic components (Y₄, M₄ and C₄) by using said second color conversion table (F₄), said fourth chromatic components (Y₄, M₄ and C₄) having second corrected densities (EY₂, EM₂ and EC₂) determined by said second color conversion table (F₄) and providing said proof image (26) on said image reproduction means (10) approximating said printed image, which is reproduced on said printing means according to said color image data (Y_{A}′, M_{A}′ and C_{A}′), on said image reproduction means (10).

2. Method in accordance with claim 1, characterized in that step (l) includes the steps of
(l-1) converting the chromatic color components (EY₂, EM₂ and EC₂) and the achromatic color components (K) through the conversion table (F₃) into a new chromatic color components (EY₃, EM₃ and EC₃) and a new achromatic color component (EK₃) respectively and
(l-2) combining the new chromatic color components (EY₃, EM₃ and EC₃) and the achromatic color component (EK₃) respectively as
EY₃ + EK₃, EM₃ + EK₃ and EC₃ + EK₃,
and
(l-3) converting the composite color components (EY₃ + EK₃, EM₃ + EK₃ and EC₃ + EK₃) through the conversion function (G₄) into a new chromatic color components (EY₄, EM₄ and EC₄) respectively, wherein the second color conversion table (F₄) includes the conversion function (G₄) and the inverse function thereof (G₃) (= G₄⁻¹).

3. Method in accordance with one of the preceding claims, characterized in that in the step of determining the fitting table (F₄) comparison is made between a double (2DFₙ) of either density value (DFₙ) of an image printed with halftones of primary chromatic color components Y, M and C of a gray scale.

4. Method in accordance with one of the preceding claims 1 or 2, characterized in that in the step of determining the fitting table (F₄) comparison is made between an image printed with a halftone of an achromatic color component (K) and a density value (DFₙ) of an image obtained by quadruple printing with the halftones of color components (Y, M, C and K) to thereby determine the second color conversion table (F₄).

5. Method according to one of the preceding claims 3 or 4, characterized in that said reference color image data. (Y₀, M₀ and C₀) is obtained by the step of reading respective colors of color patches (OP₁) with a color image reader (10), where different colors are provided on said color patches (OP₁).

6. Method of determining a correction rule used to compensate a non-linear relation between a first density of an image produced by overprinting respective halftones of chromatic (Y, M, C) and achromatic (K) components included in a color image data with corresponding color inks on a printing means and a second density of an image produced on an image forming means with an image forming process different from a process of said printing means by electrically combining said chromatic components and said achromatic components, to reproduce an image on said image forming means, of which density is identical to a density of a printed image produced on said printing means, characterized by the steps of:
(a) preparing reference gray image data which include chromatic components and express an image of a gray scale,
(b) producing first halftones of said chromatic components (Y₂, M₂ and C₂) in accordance with said reference gray image data on said printing means,
(c) producing second halftones of achromatic components (K) according to said reference gray image data, so that a density of an image obtained by printing said second halftones is identical to a density of an image obtained by overprinting said first halftones on said printing means,
(d) producing a first gray scale sample by overprinting said first halftones with corresponding chromatic color inks or printing said second halftones with a corresponding achromatic color ink on said printing means,
(e) overprinting said first and second halftones with said chromatic and achromatic color inks, respectively, to produce a second gray scale sample on said printing means,
(f) comparing both densities of said first and second gray scale samples with one another, thereby to determine a color conversion function which converts said density of said first gray scale sample into said density of said second gray scale sample, and
(g) storing data of said color conversion function into memory means as table data of said correction rule.

## Patentansprüche

1. Verfahren zum elektrischen Korrigieren von Farbbilddaten (Y, M, C und K), um ein Probedruckbild (26) auf einer Bildwiedergabevorrichtung (20) zu erhalten, die von einer Druckeinrichtung unterschiedlich ist, zum Vorsichten eines gedruckten Bildes, das auf der Druckvorrichtung entsprechend den Farbbilddaten (Y, M, C und K) erzeugt werden soll,
mit den Schritten:
(A) einem ersten Vorbereitungsprozeß einschließlich den Schritten:
(a) Vorbereiten von Daten eines Referenzfarbbildes (Y₀, M₀ und C₀) einschließlich erster chromatischer Bezugskomponenten (Y₁, M₁ und C₁), deren Dichten (EY₁, EM₁ und EC₁) vorbestimmt sind,
(b) Erzeugen erster Halbtöne (Y_{P}, M_{P} und C_{P}) für jede der ersten chromatischen Referenzkomponenten (Y₁, M₁ und C₁) entsprechend den Referenz-Farbbilddaten (Y₀, M₀ und C₀) und Überdrucken der ersten Halbtöne (Y_{P}, M_{P} und C_{P}) mit entsprechenden chromatischen Druckfarben, um somit ein erstes reproduziertes Bild (FR₁) auf der Druckeinrichtung zu erhalten, wobei das erste reproduzierte Bild (FR₁) eine erste Farbe hat,
(c) Erzeugen eines zweiten reproduzierten Bildes (SR₁) auf der Bildreproduktionseinrichtung (10) ohne Drucken gemäß den ersten chromatischen Referenzkomponenten (Y₁, M₁ und C₁), wobei das reproduzierte Bild (SR₁) eine zweite Farbe hat, die von der ersten Farbe unterschiedlich ist,
(d) Vergleichen der ersten und zweiten Farben (CS_{y}) miteinander, um somit eine erste Farbkonversionstabelle (F₂) zu erzeugen, die die Dichten (EY₁, EM₁ und EC₁) der ersten chromatischen Referenzkomponenten (Y₁, M₁ und C₁) derart korrigiert, daß das zweite repoduzierte Bild (SR₁) in der Farbe dem ersten reproduzierten Bild (FR₁) identisch ist,
gekennzeichnet durch
(B) einen zweiten Vorbereitungsprozeß einschließlich den Schritten:
(e) Vorbereiten von Grauskalendaten (DO₀, ... DOᵢ) mit zweiten chromatischen Referenzkomponenten (Y₂, M₂ und C₂), die ein Bild (FG) einer Grauskala ausdrücken,
(f) Erzeugen von zweiten Halbtönen für jeden der zweiten chromatischen Referenzkomponenten (Y₂, M₂ und C₂) entsprechend den Grauskalendaten (DO₀, ... DOᵢ) und Überdrucken der zweiten Halbtöne mit chromatischen Druckfarben entsprechend der zweiten chromatischen Referenzkomponenten (Y₂, M₂ und C₂) um ein drittes reproduziertes Bild (TG) auf der Druckeinrichtung zu erhalten,
(g) Erzeugen eines dritten Halbtones einer achromatischen Komponente (EK₃), so daß eine Dichte (DFₙ) eines Bildes auf einem Druckmaterial, das mit dem dritten Halbton gedruckt wird, identisch einer Dichte (DTₙ) des dritten reproduzierten Bildes (TG) ist,
(h) Überdrucken der zweiten Halbtöne und des dritten Halbtons mit den zweiten chromatischen Druckfarben und einer achromatischen Druckfarbe jeweils entsprechend der achromatischen Komponente (EK₃) auf der Druckeinrichtung, um somit ein viertes reproduziertes Bild zu erhalten,
(i) Vergleichen der beiden Dichten (DTₓ), (DF_{y}) des dritten reproduzierten Bildes (TG), das durch den Schritt (f) oder den Schritt (g) erhalten worden ist, und des vierten reproduzierten Bildes (FG) miteinander, um eine zweite Farbkonversionstabelle (F₄) zu erzeugen, die eine nichtlineare Beziehung zwischen den beiden Dichten (DTₓ), (DF_{y}) der dritten und vierten reproduzierten Bilder liefert, und
(C) eines Prozesses zum Korrigieren der Farbbilddaten, um das Probedruckbild (26) zu erhalten, einschließlich der Schritte:
(j) Lesen eines Bildes einer Vorlage mit einem Farbleser (10), um die Farbbilddaten (B, G, R) einschließlich erster chromatischer Komponenten (Y₁, M₁ und C₁) und der achromatischen Komponente (K) zu erhalten,
(k) Umwandeln der ersten chromatischen Komponenten (Y1, M₁ und C₁) in zweite chromatische Komponenten (Y₂, M₂ und C₂) durch Verwenden der ersten Farbkonversionstabelle (F₂), wobei die zweiten chromatischen Komponenten (Y₂, M₂ und C₂) durch die erste Farbkonversionstabelle (F₂) erste korrigierte bestimmte Dichten (EY, EM₁ und EC₁) haben, und
(l) Kombinieren der jeweiligen zweiten chromatischen Komponenten (Y₂, M₂ und C₂) mit der achromatischen Komponente (K₁), um dritte chromatische Komponenten (Y₃, M₃ und C₃) zu erhalten und weiter Umwandeln der dritten chromatischen Komponenten (Y₃, M₃ und C₃) in vierte chromatische Komponenten (Y₄, M₄ und C₄) durch Verwenden der zweiten Farbkonversionstabelle (F₄), wobei die vierten chromatischen Komponenten (Y₄, M₄ und C₄) zweite korrigierte Dichten (EY₂, EM₂ und EC₂) haben, die von der zweiten Farbkonversionstabelle (F₄) bestimmt worden sind und Bilden des Probedruckbildes (26) auf der Bildreproduktionseinrichtung (10), wobei das gedruckte Bild, das auf der Druckeinrichtung entsprechend den Farbbilddaten (Y_{A}′, M_{A}′ und C_{A}′) reproduziert wird, auf der Bildreproduktionseinrichtung (10) angenähert wird.

2. Verfahren nach Anspruch 1, dadurch gekennzeichnet, daß der Schritt (l) die Schritte umfaßt
(l-1) Umwandeln der chromatischen Farbkomponenten (EY₂, EM₂ und EC₂) und der achromatischen Farbkomponenten (K) durch die Konversionstabelle (F₃) in neue chromatische Farbkomponenten (EY₃, EM₃ und EC₃) bzw. eine neue achromatische Farbkomponente (EK₃) und
(l-2) Kombinieren der neuen chromatischen Farbkomponenten (EY₃, EM₃ und EC₃) bzw. der achromatischen Farbkomponente (EK₃) als
EY₃ + EK₃, EM₃ + EK₃ und EC₃ + EK₃,
und
(l-3) Umwandeln der zusammengesetzten Farbkomponenten (EY₃ + EK₃, EM₃ + EK₃ und EC₃ + EK₃) durch die Konversionsfunktion (G₄) in jeweils neue chromatische Farbkomponenten (EY₄, EM₄ und EC₄), wobei die zweite Farbkonversionstabelle (F₄) die Konversionsfunktion (G₄) und deren inverse Funktion (G₃) (= G₄⁻¹) umfaßt.

3. Verfahren nach einem ver vorangehenden Ansprüche, dadurch gekennzeichnet, daß in dem Schritt des Bestimmens der Anpaßtabelle (F₄) ein Vergleich zwischen einem doppelten (2DFₙ) einem der Dichtewerte (DFₙ) eines Bildes, das mit Halbtönen primärer chromatischer Farbkomponenten Y, M und C einer Grauskala gedruckt worden ist, durchgeführt wird.

4. Verfahren nach einem der vorangehenden Ansprüche 1 oder 2, dadurch gekennzeichnet, daß in dem Schritt des Bestimmens der Anpaßtabelle (F₄) der Vergleich zwischen einem Bild, das mit einem Halbton einer achromatischen Farbkomponente (K) gedruckt worden ist, und einem Dichtewert (DFₙ) eines Bildes, das durch vierfaches Drucken mit den Halbtönen der Farbkomponenten (Y, M, C und K) erhalten worden ist, durchgeführt wird, um somit die zweite Farbkonversionstabelle (F₄) zu bestimmen.

5. Verfahren nach einem der vorangehenden Ansprüche 3 oder 4, dadurch gekennzeichnet, daß die Bezugsfarbbilddaten (Y₀, M₀ und C₀) durch den Schritt des Lesens jeweiliger Farben von Farbflecken (OP₁) mit einem Farbbildleser (10) erhalten werden, wobei auf den Farbflecken (OP₁) unterschiedliche Farben vorgesehen sind.

6. Verfahren zum Bestimmen einer Korrekturregel, die verwendet wird, um eine nichtlineare Beziehung zwischen einer ersten Dichte eines Bildes, das durch Überdrucken jeweiliger Halbtöne chromatischer (Y, M, C) und achromatischer (K) Komponenten erzeugt wird, die in Farbbilddaten enthalten sind, mit entsprechenden Farb-Druckfarben auf einer Druckeinrichtung, und einer zweiten Dichte eines Bildes, das auf einer Bildformeinrichtung mit einem Bildformungsprozeß erzeugt wird, der unterschiedlich von einem Prozeß der Druckeinrichtung ist, erzeugt wird, indem elektrisch die chromatischen Komponenten und die achromatischen Komponenten kombiniert werden, um ein Bild auf der Bildformungseinrichtung zu reproduzieren, dessen Dichte indentisch einer Dichte eines gedruckten Bildes ist, das auf der Druckeinrichtung erzeugt worden ist, gekennzeichnet durch die Schritte:
(a) Vorbereiten von Referenz-Graubilddaten, die chromatische Komponenten umfassen und ein Bild einer Grauskale ausdrücken,
(b) Erzeugen von ersten Halbtönen der chromatischen Komponenten (Y₂, M₂ und C₂) gemäß den Referenz-Graubilddaten auf der Druckeinrichtung,
(c) Erzeugen zweiter Halbtöne von achromatischen Komponenten (K) entsprechend den Referenz-Graubilddaten, so daß eine Dichte eines Bildes, das durch Drucken der zweiten Halbtöne erhalten worden ist, identisch einer Dichte eines Bildes ist, das durch Überdrucken der ersten Halbtöne auf der Druckeinrichtung erhalten worden ist,
(d) Erzeugen einer ersten Grauskalenprobe durch Überdrucken der ersten Halbtöne mit entsprechenden chromatischen Farb-Druckfarben oder Drucken der zweiten Halbtöne mit einer entsprechenden achromatischen Farb-Druckfarbe auf der Druckeinrichtung,
(e) Überdrucken der ersten und zweiten Halbtöne mit den chromatischen und achromatischen Farb-Druckfarben, um eine zweite Grauskalenprobe auf der Druckeinrichtung zu erzeugen,
(f) Vergleichen der beiden Dichten der ersten und zweiten Grauskalenproben miteinander, um somit eine Farbkonversionsfunktion zu bestimmen, die die Dichte der ersten Grauskalenprobe in die Dichte der zweiten Grauskalenprobe umwandelt, und
(g) Speichern der Daten der Farbkonversionsfunktion in Speichereinrichtungen als Tabellendaten der Korrekturregel.

## Revendications

1. Procédé de correction de manière électrique de données d'image couleur (Y, M, C et K) pour obtenir une image d'épreuve (26) sur des moyens de reproduction d'image (20) autres que des moyens d'impression, pour pré-visualiser une image imprimée destinée à être produite sur lesdits moyens d'impression conformément auxdites données d'image couleur (Y, M, C et K), comportant les étapes constituées de :
(A) un premier traitement de préparation comportant les étapes consistant à :
(a) préparer les données d'une image couleur de référence (Y₀, M₀ et C₀) comportant des premières composantes chromatiques de référence (Y₁, M₁ et C₁) dont les densités (EY₁, EM₁ et EC₁) sont prédéterminées,
(b) produire des premières demi-teintes (Y_{P}, M_{P} et C_{P}) pour chacune desdites premières composantes chromatiques de reference (Y₁, M₁ et C₁) conformément auxdites données d'image couleur de référence (Y₀, M₀ et C₀) et surimprimer lesdites premières demi-teintes (Y_{P}, M_{P} et C_{P}) à l'aide d'encres chromatiques correspondantes, pour obtenir ainsi une première image reproduite (FR₁) sur lesdits moyens d'impression, ladite première image reproduite (FR₁) ayant une première couleur,
(c) produire une deuxième image reproduite (SR₁) sur lesdits moyens de reproduction d'image (10) sans imprimer, conformément auxdites premières composantes chromatiques de référence (Y₁, M₁ et C₁), ladite deuxième image reproduite (SR₁) ayant une seconde couleur différente de ladite première couleur,
(d) comparer lesdites première et seconde couleurs (CS_{y}) l'une avec l'autre, pour créer ainsi une première table de conversion de couleur (F₂) qui corrige lesdites densités (EY₁, EM₁ et EC₁) des premières composantes chromatiques de référence (Y₁, M₁ et C₁) de telle sorte que ladite deuxième image reproduite (SR₁) soit identique à ladite première image reproduite (FR₁) au niveau de la couleur,
caractérisé en ce qu'il comporte
(B) un second traitement de préparation comportant les étapes consistant à :
(e) préparer des données d'échelle de gris (DO₀, ... DOᵢ) ayant des deuxièmes composantes chromatiques de référence (Y₂, M₂ et C₂) qui expriment une image (FG) d'une échelle de gris,
(f) produire des deuxièmes demi-teintes pour chacune desdites deuxièmes composantes chromatiques de référence ((Y₂, M₂ et C₂) conformément auxdites données d'échelle de gris (DO₀, ... DOᵢ) et surimprimer lesdites deuxièmes demi-teintes à l'aide d'encres chromatiques correspondant auxdites deuxièmes composantes chromatiques de référence (Y₂, M₂ et C₂) pour obtenir une troisième image reproduite (TG) sur lesdits moyens d'impression,
(g) produire une troisième demi-teinte constituée d'une composante achromatique (EK₃) de telle sorte que la densité (DFₙ) d'une image sur une matière imprimée à l'aide de ladite troisième demi-teinte soit identique à la densité (DTₙ) de ladite troisième image reproduite (TG),
(h) surimprimer lesdites deuxièmes demi-teintes et troisième demi-teinte à l'aide desdites deuxièmes encres chromatiques et d'une encre achromatique correspondant à ladite composante achromatique (EK₃) sur lesdits moyens d'impression, respectivement, pour obtenir ainsi une quatrième image reproduite,
(i) comparer les deux densités (DTₓ), (DF_{y}) de ladite troisième image reproduite (TG) obtenue dans ladite étape (f) ou ladite étape (g) et de ladite quatrième image reproduite (FG) l'une avec l'autre pour créer une seconde table de conversion de couleur (F₄) qui fournit une relation non-linéaire entre lesdites deux densités (DTₓ), (DT_{y}) desdites troisième et quatrième images reproduites, et
(C) un traitement pour corriger lesdites données d'image couleur pour obtenir ladite image d'épreuve (26), comportant les étapes consistant à :
(j) lire une image d'un original à l'aide d'un lecteur couleur (10) pour obtenir lesdites données d'image couleur (B, G, R) comportant les premières composantes chromatiques (Y₁, M₁ et C₁) et ladite composante achromatique (K),
(k) convertir lesdites premières composantes chromatiques (Y₁, M₁ et C₁), en deuxièmes composantes chromatiques (Y₂, M₂ et C₂) en utilisant ladite première table de conversion de couleur (F₂), lesdites deuxièmes composantes chromatiques (Y₂, M₂ et C₂) ayant des premières densités corrigées (EY₁, EM₁ et EC₁) déterminées par ladite première table de conversion de couleur (F₂), et
(l) combiner lesdites deuxièmes composantes chromatiques respectives (Y₂, M₂ et C₂) à ladite composante achromatique (K₁) pour obtenir des troisièmes composantes chromatiques (Y₃, M₃ et C₃) et convertir en outre lesdites troisièmes composantes chromatiques (Y₃, M₃ et C₃) en quatrièmes composantes chromatiques (Y₄, M₄ et C₄) en utilisant ladite seconde table de conversion de couleur (F₄), lesdites quatrièmes composantes chromatiques (Y₄, M₄ et C₄) ayant des secondes densités corrigées (EY₂, EM₂ et EC₂) déterminées par ladite seconde table de conversion de couleur (F₄) et fournir sur lesdits moyens de reproduction d'image (10) ladite image d'épreuve (26) se rapprochant de ladite image imprimée, qui est reproduite sur lesdits moyens d'impression conformément auxdites données d'image couleur (Yₐ′, Mₐ′ et Cₐ′), sur lesdits moyens de reproduction d'image (10).

2. Procédé selon la revendication 1, caractérisé en ce que l'étape (l) comporte les étapes consistant à:
(l-1) convertir les composantes de couleur chromatiques (EY₂, EM₂ et EC₂) et les composantes de couleur achromatiques (K) par l'intermédiaire de la table de conversion (F₃) en nouvelles composantes de couleur chromatiques (EY₃, EM₃ et EC₃) et une nouvelle composante de couleur achromatique (EK₃) respectivement, et
(l-2) combiner les nouvelles composantes de couleur chromatiques (EY₃, EM₃ et EC₃) et la composante de couleur achromatique (EK₃) respectivement en tant que
EY₃ + EK₃, EM₃ + EK₃ et EC₃ + EK₃,
et
(l-3) convertir les composantes de couleur composites (EY₃ + EK₃, EM₃ + EK₃ et EC₃ + EK₃) par l'intermédiaire de la fonction de conversion (G₄) en nouvelles composantes de couleur chromatiques (EY₄, EM₄ et EC₄) respectivement, la seconde table de conversion de couleur (F₄) comportant la fonction de conversion (G₄) et la fonction inverse de celle-ci (G₃ = G$\frac{\text{-1}}{\text{4}}$).

3. Procédé selon l'une quelconque des revendications précédentes, caractérisé en ce que dans l'étape consistant à déterminer la table de conversion (F₄) une comparaison est faite entre le double (2DFₙ) de l'une ou l'autre valeur de densité (DFₙ) d'une image imprimée et les demi-teintes de composantes de couleur chromatique primaire Y, M et C d'une échelle de gris.

4. Procédé selon l'une quelconque des revendications 1 ou 2, caractérisé en ce que dans l'étape consistant à déterminer la table de conversion (F₄) une comparaison est faite entre une image imprimée ayant une demi-teinte constituée d'une composante de couleur achromatique (K) et une valeur de densité (DFₙ) d'une image obtenue par impression quadruple à l'aide des demi-teintes de composantes de couleur (Y, M, C et K) pour déterminer ainsi la seconde table de conversion de couleur (F4).

5. Procédé selon l'une quelconque des revendications 3 ou 4, caractérisé en ce que lesdites données d'image de couleur de référence (Y₀, M₀ et C₀) sont obtenues par l'étape consistant à lire les couleurs respectives de pastilles de couleur (OP₁) à l'aide d'un lecteur d'image couleur (10), où différentes couleurs existent dans lesdites pastilles de couleur (OP₁).

6. Procédé de détermination d'une règle de correction utilisée pour compenser une relation non-linéaire existant entre une première densité d'une image produite par surimpression de demi-teintes respectives de composantes chromatiques (Y, M, C) et achromatiques (K) comprises dans des données d'image couleur à l'aide d'encres de couleurs correspondantes sur des moyens d'impression et une seconde densité d'une image produite sur des moyens de formation d'image à l'aide d'un traitement de formation d'image différent d'un traitement par lesdits moyens d'impression en combinant électriquement lesdites composantes chromatiques et lesdites composantes achromatiques pour reproduire une image sur lesdits moyens de formation d'image, dont la densité est identique à une densité d'une image imprimée produite sur lesdits moyens d'impression, caractérisé en ce qu'il comporte les étapes consistant à :
(a) préparer des données d'image de gris de référence qui comporte des composantes chromatiques et expriment une image d'échelle de gris,
(b) produire des premières demi-teintes desdites composantes chromatiques (Y₂, M₂ et C₂) conformément auxdites données d'image de gris de référence sur lesdits moyens d'impression,
(c) produire des deuxièmes demi-teintes de composantes achromatiques (K) conformément auxdites données d'image de gris de référence, de sorte que la densité de l'image obtenue par impression desdites deuxièmes demi-teintes soit identique à la densité d'une image obtenue par surimpression desdites premières demi-teintes sur lesdits moyens d'impression,
(d) produire un premier échantillon d'échelle de gris en surimprimant lesdites premières demi-teintes à l'aide d'encres de couleurs chromatiques correspondantes ou imprimer lesdites deuxièmes demi-teintes à l'aide d'une encre de couleur achromatique correspondante sur lesdits moyens d'impression,
(e) surimprimer lesdites premières et deuxièmes demi-teintes à l'aide desdites encres de couleurs chromatiques et de couleur achromatique, respectivement, pour produire un second échantillon d'échelle de gris sur lesdits moyens d'impression,
(f) comparer les deux densités desdits premier et second échantillons d'échelle de gris l'un avec l'autre, pour déterminer ainsi une fonction de conversion de couleur qui convertit ladite densité dudit premier échantillon d'échelle de gris en densité dudit second échantillon d'échelle de gris, et
(g) mémoriser les données de ladite fonction de conversion de couleur dans des moyens formant mémoire en tant que table de données de ladite règle de correction.
